# EUROPEAN PATENT APPLICATION

(11) **EP 4 838 339 A1**
(43) Date of publication of application: **11.11.2026**
(21) Application number: 25823705.6
(22) Date of filing: 20.05.2025
(51) Int. Cl.: G06F 3/038

(54) **DONGLE DEVICE CAPABLE OF MOUSE SETTING AND CONTROL METHOD THEREOF**

(30) Priority: 21.03.2025 KR 20250036445
(71) Applicant: Aplusx Inc., Yongin-si, Gyeonggi-do 16976 (KR)
(72) Inventor: SHIM, Kun Hee, Seoul 06616 (KR); YOON, Ji Yong, Anyang-si, Gyeonggi-do 14100 (KR); HA, Young Hwan, Seoul 07980 (KR)
(74) Representative: dompatent
(86) International application number: PCT/KR2025/006811
(87) International publication number: WO 2026/197467

(57) **Abstract**

The present disclosure relates to a dongle device capable of setting a mouse, and may include a display configured to display information indicating at least one attribute value set for the mouse; a communication module configured to communicate with the mouse; and a control module configured to, when a signal received from the mouse is a signal related to setting the attribute value, change the attribute value of the mouse according to the received signal, and control the display such that information indicating the changed attribute value is displayed.

## Description

### [TECHNICAL FIELD]

The present disclosure relates to a dongle device capable of setting a mouse.

### [BACKGROUND ART]

To enhance user experience and work efficiency, it is necessary to adjust various sensor sensitivities and settings on a mouse, such as DPI and Polling Rate.

A method of attaching buttons to the mouse itself to adjust the setting values is used so that the user can conveniently change the settings. However, this method has a drawback in that the weight of the mouse is increased due to the addition of setting change buttons.

### [DETAILED DESCRIPTION OF THE INVENTION]

### [TECHINICAL PROBLEM]

The present disclosure is to provide a dongle device capable of setting a mouse.

Furthermore, an embodiment disclosed in the present disclosure aims to provide a dongle device capable of setting a mouse, which can change an attribute value of the mouse according to a received signal, when the signal input to and received from the mouse is a signal related to setting the attribute value of the mouse.

Technical problems of the inventive concept are not limited to the technical problems mentioned above, and other technical problems not mentioned will be clearly understood by those skilled in the art from the following description.

### [TECHNICAL SOLUTION]

In an aspect of the present disclosure, a dongle device capable of setting a mouse may include a display configured to display information indicating at least one attribute value set for the mouse; a communication module configured to communicate with the mouse; and a control module configured to, when a signal received from the mouse is a signal related to setting the attribute value, change the attribute value of the mouse according to the received signal, and control the display such that information indicating the changed attribute value is displayed.

Furthermore, the control module may be configured to: enter a setting mode for setting the attribute when a state of the mouse or a signal received from the mouse satisfies a preset first condition; and change the attribute value based on the signal received from the mouse in the setting mode.

Furthermore, wherein the control module is configured to determine that the first condition is satisfied when a combination of signals set for entry into the setting mode is received.

Furthermore, the control module is configured to change a corresponding attribute value according to the signal received from the mouse in the setting mode.

Furthermore, the control module is configured to: select an attribute to be set according to a first signal input to and received from the mouse after entering the setting mode; and change a value of the selected attribute according to a second signal received after the first signal.

Furthermore, the control module is configured to block transmission of a signal received from the mouse to a target device when the setting mode is entered, until the setting mode is terminated.

Furthermore, the control module is configured to terminate the setting mode and release the blocking when the state of the mouse or the signal received from the mouse satisfies a preset second condition.

Furthermore, the dongle device may further include a battery; and a storage module, wherein the control module is configured to: supply power to the device via the battery when the device is not electrically connected to a target device; store the attribute value set in the setting mode in the storage module; and transfer the attribute value stored in the storage module to the target device to reflect the attribute value when electrically connected to the target device.

Furthermore, the dongle device may further include a mounting part formed such that a figure is mounted on one surface of the dongle device capable of setting the mouse, wherein the mounting part includes a coupling structure allowing the figure to be replaceable.

In another aspect of the present disclosure, a control method for a dongle device capable of setting a mouse may include displaying a set value for at least one attribute configured for the mouse; receiving a signal input from the mouse; changing the value of the attribute according to the received signal, when the received signal is a signal related to setting the attribute; and displaying information indicating the changed value of the attribute through a display.

In still another aspect of the present disclosure, a mouse setting system may include a mouse; and a dongle device capable of setting the mouse, wherein the dongle device includes: a display configured to display information indicating at least one attribute value set for the mouse; a communication module configured to communicate with the mouse; and a control module configured to, when a signal received from the mouse is a signal related to setting the attribute value, change the attribute value of the mouse according to the received signal, and control the display such that information indicating the changed attribute value is displayed.

In addition, a computer program stored on a computer-readable recording medium for executing a method for implementing the present disclosure may be further provided.

### [ADVANTAGEOUS EFFECTS OF THE INVENTION]

According to the present disclosure, a dongle device capable of configuring a mouse can be provided.

Furthermore, according to the present disclosure, when a signal input to and received from the mouse is a signal related to setting an attribute value of the mouse, the attribute value of the mouse can be changed according to the corresponding signal.

Furthermore, according to the present disclosure, the device can enter a mode for setting an attribute according to a signal received from the mouse, and subsequently change the attribute value according to the signal received thereafter.

The effects of the present disclosure are not limited to the effects mentioned above, and other effects not mentioned can be clearly understood by those skilled in the art from the description.

### [DESCRIPTION OF THE DRAWINGS]

FIG. 1 is a schematic diagram of a mouse setting system according to an embodiment of the present disclosure.
FIG. 2 is a block diagram of a dongle device capable of setting a mouse according to an embodiment of the present disclosure.
FIG. 3 is a flowchart illustrating a control method of the dongle device capable of setting a mouse according to an embodiment of the present disclosure.
FIG. 4 is a diagram illustrating information indicating an attribute value set for a mouse being displayed on a display of the dongle device capable of setting a mouse.
FIG. 5 is a diagram illustrating entering a setting mode according to a state of the mouse.
FIGS. 6 and 7 are diagrams illustrating changing an attribute value according to a signal received from the mouse.
FIG. 8 is a diagram illustrating a figure being mounted on the dongle device.

### [BEST MODE]

Throughout the present disclosure, the same reference numerals refer to the same components. The present disclosure does not describe all the elements of the embodiments, and common contents in the technical field to which the present disclosure belongs or contents overlapping between embodiments are omitted. The terms 'unit,' 'module,' 'member,' and 'block' used in the specification can be implemented in software or hardware, and depending on the embodiments, a plurality of 'units,' 'modules,' 'members,' or 'blocks' may be implemented as a single component, or a single 'unit,' 'module,' 'member,' or 'block' may include a plurality of components.

Throughout the specification, when a part is referred to as being "connected" to another part, it includes not only the case where it is directly connected but also the case where it is indirectly connected, and the indirect connection includes being connected via a wireless communication network.

Also, when a part "includes" any component, it means that it may further include other components, without excluding other components, unless specifically stated to the contrary.

Throughout the specification, when a member is positioned "on" another member, it includes not only the case where the member is in contact with the other member but also the case where another member exists between the two members.

The terms such as first and second are used to distinguish one component from another, and the components are not limited by the terms described above.

The singular expression includes the plural expression unless the context clearly dictates otherwise.

The identification codes in each step are used for convenience of description, and the identification codes do not describe the order of each step. Each step can be performed differently from the order specified, unless a specific order is clearly described in the context.

Hereinafter, the operational principles and embodiments of the present disclosure will be described with reference to the accompanying drawings.

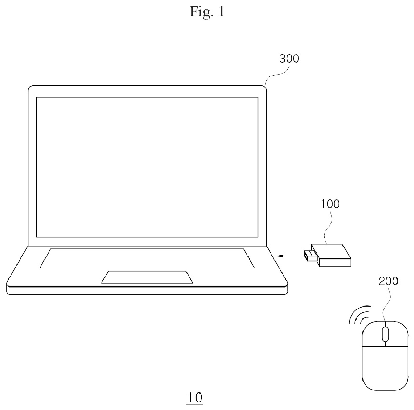

FIG. 1 is a schematic diagram of a mouse setting system 10 according to an embodiment of the present disclosure.

Referring to FIG. 1, a mouse setting system 10 according to an embodiment of the present disclosure includes a dongle device 100 capable of setting a mouse and a mouse 200.

In the embodiment of the present disclosure, the dongle device 100 capable of setting a mouse is used to wirelessly connect the mouse 200 to a target device 300, and may simultaneously perform transmitting and receiving functions.

In the embodiment of the present disclosure, the dongle device 100 may set an attribute value of the mouse 200 using a signal received from the mouse 200. In the embodiment of the present disclosure, the dongle device 100 and the mouse 200 capable of setting a mouse do not include separate buttons for setting the attribute value and utilize existing buttons, thereby enabling miniaturization and weight reduction.

The dongle device 100 capable of setting a mouse may be connected to the target device 300 through a connection port. For example, the target device 300 may include a USB port as a connection port, and the dongle device 100 may include a plug insertable into the connection port.

The target device 300 may be a notebook PC as shown in FIG. 1, but is not limited thereto, and any device having a connection port capable of using the mouse 200 as an input means may be applied.

When a signal related to setting the attribute value of the mouse 200 is detected among signals input to and received from the mouse 200, the dongle device 100 capable of setting a mouse may set the attribute value of the mouse 200 according to the received signal, and transmit the setting to the target device 300 and the mouse 200 so that the attribute value is reflected.

Hereinafter, the mouse setting system 10 and the dongle device 100 capable of setting a mouse according to an embodiment of the present disclosure will be described in more detail with reference to other drawings.

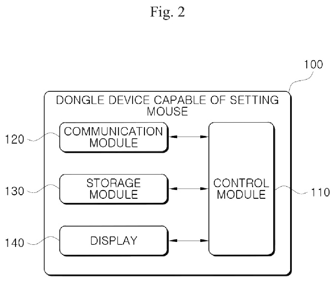

FIG. 2 is a block diagram of the dongle device 100 capable of setting a mouse according to an embodiment of the present disclosure.

Referring to FIG. 2, the dongle device 100 capable of setting a mouse according to an embodiment of the present disclosure includes a control module 110, a communication module 120, a storage module 130, and a display 140.

However, in some embodiments, the dongle device 100 capable of setting a mouse may include fewer or more components than those shown in FIG. 2.

The control module 110 includes at least one processor.

The processor may be implemented as a storage module that stores data for an algorithm or a program reproducing the algorithm for controlling the operations of the components in the device 100, and at least one processor that performs the above-described operations using the data stored in the storage module. In this case, the storage module and the processor may be implemented as separate chips. Alternatively, the storage module and the processor may be implemented as a single chip.

The processor may control the overall operation of the device 100 in addition to the operation related to the application program. The processor may process or store signals, data, information, and the like, input or output through the components described above, or drive an application program stored in the storage unit, thereby providing or processing appropriate information or functions to the user.

In addition, the processor may control at least some of the components of the device 100 to drive the application program stored in the storage unit. Furthermore, the processor may operate at least two or more of the components included in the device 100 in combination to drive the application program.

One or more processors may be implemented. Hereinafter, the processor may be regarded as plural even in the case that it is expressed in the singular. The processor may mean a data processing device embedded in hardware, having a physically structured circuit to perform functions expressed as codes or instructions included in a program. As such, the processor is an example of a data processing device embedded in hardware, and may cover processing devices such as a microprocessor, a central processing unit (CPU), a processor core, a multiprocessor, an application-specific integrated circuit (ASIC), and a field programmable gate array (FPGA), but the scope of the present invention is not limited thereto.

In various embodiments, the processor may include one or more of a Central Processing Unit (CPU), an Application Processor (AP), or a Communication Processor (CP). Some may perform functions related to instructions stored in memory by accessing the memory as hardware.

The communication module 120 may include one or more modules that connect the dongle device 100 capable of setting a mouse to one or more networks.

The dongle device 100 capable of setting a mouse may be connected to the target device 300 and the mouse 200 through the communication module 120, and the dongle device 100 may perform transmitting and receiving functions through the communication module 120. The control module 110 transmits and receives data with the mouse 200 and the target device 300 through the communication module 120. For example, in the embodiment of the present disclosure, the communication module 120 of the dongle device 100 may communicate with the mouse 200 through the 2.4GHz frequency band, but is not limited thereto.

The communication module 120 may include one or more components enabling communication with an external device, and may include, for example, at least one of a wired communication module, a wireless communication module, a near-field communication module, and a location information module.

The wired communication module may include various wired communication modules such as a Local Area Network (LAN) module, a Wide Area Network (WAN) module, or a Value Added Network (VAN) module, as well as various cable communication modules such as Universal Serial Bus (USB), High Definition Multimedia Interface (HDMI), Digital Visual Interface (DVI), RS-232 (recommended standard 232), and power line communication.

The wireless communication module may include a wireless communication module that supports various wireless communication methods such as Wi-Fi module, Wireless broadband (Wibro) module, as well as Global System for Mobile Communication (GSM), Code Division Multiple Access (CDMA), Wideband Code Division Multiple Access (WCDMA), Universal Mobile Telecommunications System (UMTS), Time Division Multiple Access (TDMA), Long Term Evolution (LTE), 4G, 5G, 6G, and the like.

The storage module 130 may include at least one storage medium.

The storage module 130 may store data that supports various functions of the device 100. The storage unit may store a plurality of application programs (or applications) executed in the device 100, data and instructions for the operation of the device 100. At least some of these application programs may exist for the basic functions of the device 100. Meanwhile, the application program is stored in the storage unit, installed in the device, and may be driven by the processor to perform an operation (or function).

The storage module 130 may store data that supports various functions of the device 100 and programs for the operation of the processor, input/output data may be stored, and a plurality of application programs (or applications) executed in the device 100, data and instructions for the operation of the device 100 may be stored. At least some of these application programs may be downloaded from an external server through wireless communication.

The display 140 may output matters related to the attribute value of the mouse 200. Since the display 140 is included in the dongle device 100 rather than the mouse 200, the mouse 200 may be miniaturized and lightened according to the embodiment of the present disclosure.

The display 140 is for generating an output related to vision, hearing, or touch, and may include at least one of a display unit, an audio output unit, a haptic module, and a light output unit. In some embodiments, the display 140 may output a screen or may output light of a specific color.

The display 140 may include LCD and LED elements capable of emitting at least one color, and the control module 110 may cause the LED elements to emit light to indicate the attribute value being set.

In one embodiment, the display 140 may include a plurality of light-emitting elements, and the color may be set according to the attribute of the mouse 200.

For example, a first attribute of the mouse 200 may be set to a first color, a second attribute to a second color, and a third attribute to a third color, respectively. When the value of each attribute is changed, light of the color set for the corresponding attribute may be emitted. Meanwhile, one light-emitting element may output multiple colors, and the color of the light-emitting element may be changed according to the magnitude of the value of the first attribute.

In one embodiment, a display module may be applied as the display 140, and the display module may display the attribute value for at least one attribute set through the dongle device 100 capable of setting a mouse.

The display 140 may display (output) information processed in the device 100. For example, the display 140 may display execution screen information of an application program (e.g., application) running on the device 100, or UI (User Interface) and GUI (Graphic User Interface) information according to the execution screen information.

The display 140 may display various contents (e.g., text, image, video, icon, symbol, etc.). For example, the display 140 may display an image corresponding to at least one video data included in the application program. In various embodiments, the display 140 may include a Liquid Crystal Display (LCD), a Light-Emitting Diode (LED) display, an Organic LED (OLED) display, a microelectromechanical systems (MEMS) display, or an electronic paper display.

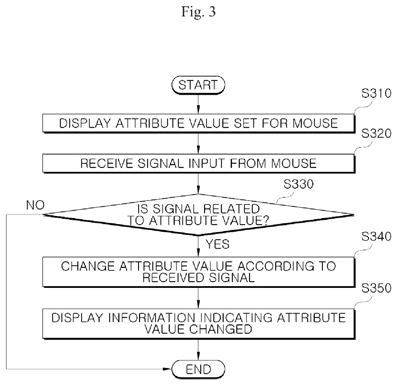

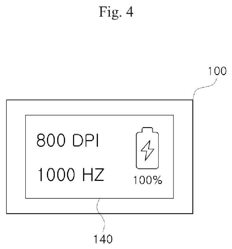

FIG. 3 is a flowchart illustrating a control method of the dongle device 100 capable of setting a mouse according to an embodiment of the present disclosure. FIGS. 4 to 8 are various exemplary diagrams for describing the operation of the mouse setting system 10 and the dongle device 100 capable of setting a mouse according to an embodiment of the present disclosure. With reference to FIGS. 3 to 8, the operation process of the mouse setting system 10 and the dongle device 100 capable of setting a mouse will be described.

The control module 110 displays an attribute value set for the mouse 200 (step S310).

FIG. 4 is a diagram illustrating information indicating an attribute value set for the mouse 200 being displayed on the display 140 of the dongle device 100 capable of setting a mouse.

The control module 110 displays information indicating the value of each attribute currently set for the mouse 200 through the display 140, as shown in FIG. 4. In this case, DPI, Polling Rate, Power, and the like, may be displayed on the display 140, and whether it is in a setting mode or a general mode may also be displayed.

The control module 110 receives a signal input from the mouse 200 (step S320).

The control module 110 checks whether the signal received in S320 is related to the attribute value of the mouse 200 (step S330).

In the case that the result of the check in step S330 is that the signal received in step S320 is related to the attribute value of the mouse 200, the control module 110 changes the attribute value according to the signal received in S320 (step S340).

In this case, in the case that the result of the check in step S330 is that the signal received in S320 (mouse data) is not related to the attribute value of the mouse 200, the control module 110 transmits the mouse data to the Host USB (step S360).

Specifically, the control module 110 receives mouse data from the mouse 200 through the communication module 120. In this case, the control module 110 of the mouse 200 determines whether the mouse data received from the mouse 200 is data related to setting the attribute value of the mouse 200. That is, the control module 110 checks whether there is a signal related to setting the attribute value among the signals received from the mouse 200.

For example, the control module 110 determines that the mouse data is related to the attribute value of the mouse 200 in the case that the mouse data is data related to entry into the setting mode, or in the case that it is received after entry into the setting mode. Then, the control module 110 may enter the setting mode according to the mouse data or change and set the value of the attribute corresponding to the received mouse data.

On the other hand, in the case that the mouse data received from the mouse 200 is data unrelated to setting the attribute value of the mouse 200, the control module 110 may transmit the mouse data to the target device 300 through the Host USB.

In the embodiment of the present disclosure, entry into the setting mode may be determined by the control module 110 of the dongle device 100 capable of setting a mouse, or may be determined by a processor (not shown) of the mouse 200.

The processor of the mouse 200 may request the dongle device 100 capable of setting a mouse to execute the setting mode when a signal input to the mouse 200 or a state of the mouse 200 meets the condition for entering the setting mode.

In one embodiment, the processor of the mouse 200 or the control module 110 may enter a setting mode capable of setting the attribute of the mouse 200 when the state of the mouse 200 or the signal received from the mouse 200 satisfies a preset first condition, and change the attribute value for the mouse 200 based on the signal received from the mouse 200 in the setting mode.

When the processor of the mouse 200 determines the entry into the setting mode, a related signal may be transmitted to the control module 110 of the dongle device 100, and when the control module 110 of the dongle device 100 determines the entry into the setting mode, a related signal may be transmitted to the processor of the mouse 200.

In the embodiment of the present disclosure, the following methods may be applied to enter the setting mode capable of setting the attribute value of the mouse 200:
① The mouse 200 may include a separate key for entering the setting mode.
② At least one signal combination for entering the setting mode may be stored in the dongle device 100 or the mouse 200.
③ At least one mouse 200 state information for entering the setting mode may be stored in the dongle device 100 or the mouse 200.

In the embodiment of ①, the processor of the mouse 200 or the control module 110 enters the setting mode capable of setting the attribute value when the input of the corresponding key is detected from the mouse 200.

In the embodiment of ②, the processor of the mouse 200 or the control module 110 enters the setting mode capable of setting the attribute value when the combination of signals received from the mouse 200 matches the signal combination set for entry into the setting mode.

For example, the entry condition for the setting mode may be that a combination of defined buttons on the mouse 200 is input, or that a combination of defined buttons on the mouse 200 is input for more than a preset time. The condition for entering the setting mode may be set as the left, right, and wheel buttons of the mouse 200 being clicked simultaneously for 2 seconds or more, or the left button of the mouse 200 being clicked for 2 seconds or more, followed by the right button being clicked for 2 seconds or more.

In the embodiment of ③, the processor of the mouse 200 or the control module 110 detects the state information of the mouse 200, and enters the setting mode capable of setting the attribute value when the detected state information matches the mouse 200 state set for entry into the setting mode.

For example, the processor of the mouse 200 or the control module 110 may determine that the state information of the mouse 200 is the state information for entry into the setting mode when the mouse 200 is at or above a preset angle from its proper position, or when the mouse 200 is lifted a set height or more from the floor, or when it is maintained at or above a preset angle for a preset time, or when it is maintained lifted a set height or more from the floor for a preset time.

Here, the processor of the mouse 200 or the control module 110 may determine whether the mouse 200 is at or above a preset angle from its proper position or is lifted a set height or more from the floor by using a gyro sensor (not shown) provided in the mouse 200, or based on the result of receiving light emitted from a light-emitting unit of the mouse 200, but is not limited thereto.

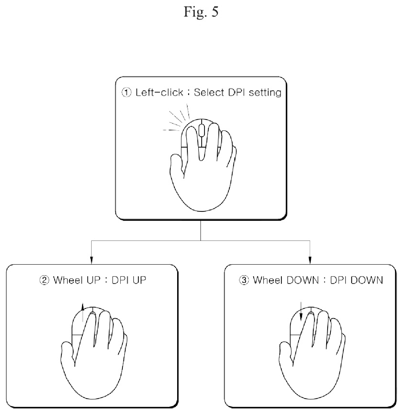

FIG. 5 is a diagram illustrating entering a setting mode according to a state of the mouse 200.

Referring to FIG. 5, inverting the mouse 200 may be set as the state information of the mouse 200 that allows entry into the setting mode.

In one embodiment, the dongle device 100 capable of setting a mouse may enter the setting mode capable of setting the attribute value when the inversion of the mouse 200 is detected, or when the detected inversion of the mouse 200 is maintained for a preset time or more.

Referring to FIG. 5, when the inversion of the mouse 200 is detected (510) from the state information of the mouse 200, the control module 110 enters the setting mode (520) capable of setting the attribute value for the mouse 200.

In one embodiment, two or more of the methods ①, ②, and ③ for entering the setting mode may be used in combination.

For example, the processor of the mouse 200 or the control module 110 may enter the setting mode when the state information of the mouse 200 becomes the preset state information and then an input signal of a specific button click is received from the mouse 200.

In one embodiment, the processor of the mouse 200 or the control module 110 may enter the setting mode when a signal of a specific button click is received while the mouse 200 is tilted at or above a preset angle.

In one embodiment, the processor of the mouse 200 or the control module 110 may enter the setting mode when it is determined that the mouse 200 is at or above a preset height from the floor (e.g., mouse pad).

The above examples are only some of the various examples that may enter the setting mode, and various combinations of input signals may be applied in addition thereto. For example, the processor of the mouse 200 or the control module 110 may enter the setting mode when the back button and the forward button of the mouse 200 are pressed for N seconds or more.

The processor of the mouse 200 or the control module 110 may enter the setting mode when the light signal input of the mouse 200 is not received for a preset time or more.

In one embodiment, the processor of the mouse 200 or the control module 110 may enter the setting mode when the state where the mouse 200 is located at a height equal to or greater than a preset height is maintained for a preset time or more.

In one embodiment, in the case that the input signal due to the movement of the mouse 200 is a first input signal, and the input signal related to the button input of the mouse 200 is a second input signal, the control module 110 may process the received first input signal as ignored after entering the setting mode, and check in the case that any of the received second input signals meets a preset condition. Then, the control module 110 may change the value of the corresponding attribute according to the received second input signal in the case that the received second input signal meets the preset condition.

In one embodiment, the mouse 200 or the control module 110 may request that a menu for the setting mode be displayed on the screen of the target device 300 when a preset key of the mouse is input or when the mouse 200 enters a preset state.

In this case, the preset key may be a preset key combination or a multi-key. The preset state may be the case where the mouse is in an inverted state. However, this is only a possible example and is not limited thereto.

Then, when the menu for the setting mode is displayed on the screen of the target device 300, the mouse 200 or the control module 110 may control the menu based on the input signal for the menu received from the mouse 200, thereby controlling the value of the attribute to be changed. That is, in the embodiment of the present disclosure, instead of the dongle device 200 having separate buttons for changing the attribute value, the buttons of the mouse 200 are utilized, and when entering the setting mode, the input of the mouse 200 is utilized as input for changing the attribute value.

For example, when the menu is displayed on the screen of the target device 300, the mouse 200 or the control module 110 may move the menu according to the signal input through the wheel of the mouse 200, select and set the corresponding menu according to the signal input through the left button, and control the device to exit the menu through the right button.

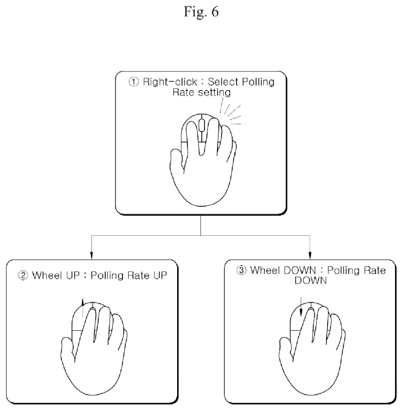

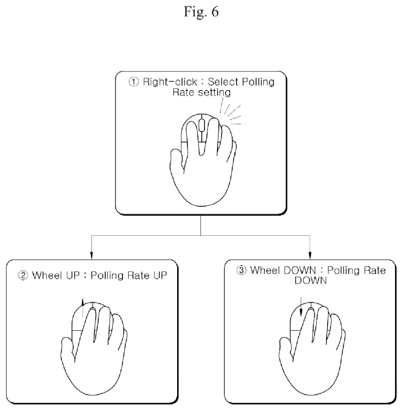

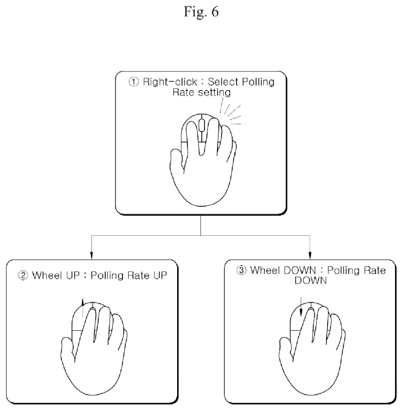

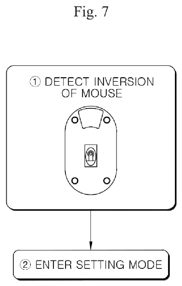

FIGS. 6 and 7 are diagrams illustrating changing an attribute value according to the signal received from the mouse 200. Referring to FIGS. 6 and 7, the control module 110 changes the value of the corresponding attribute according to the signal input to and received from the mouse 200 in the setting mode.

In this case, the signal may be a signal input through the button or wheel of the mouse 200. Additionally, the signal may be a signal by an optical sensor of the mouse 200 due to the movement of the mouse 200. For example, the control module 110 may change the value of the corresponding attribute according to the signal by the optical sensor of the mouse 200 due to the movement of the mouse 200.

In one embodiment, the control module 110 may select the attribute to be set according to the first signal received from the mouse 200 in the setting mode.

Then, the control module 110 may control the value of the corresponding attribute to be changed according to the second signal received after the first signal.

A specific embodiment thereof will be described with reference to FIG. 6.
① When the control module 110 receives the first signal (610: left button click of the mouse 200), it selects DPI as the target attribute to be set.
② When the control module 110 receives the second signal (620: mouse 200 wheel up), it controls the value of the target attribute (DPI) to increase.
③ When the control module 110 receives the second signal (630: mouse 200 wheel down), it controls the value of the target attribute (DPI) to decrease.

A specific embodiment thereof will be described with reference to FIG. 7.
① When the control module 110 receives the first signal (710: right button click of the mouse 200), it selects Polling Rate as the target attribute to be set.
② When the control module 110 receives the second signal (720: mouse 200 wheel up), it controls the value of the target attribute (Polling Rate) to increase.
③ When the control module 110 receives the second signal (730: mouse 200 wheel down), it controls the value of the target attribute (Polling Rate) to decrease.

In the embodiment of the present disclosure, when entering the setting mode, the control module 110 utilizes the signal received from the mouse 200 as a signal for changing the attribute value, and may block the transmission of the signal received from the mouse 200 to the target device 300 until the setting mode is terminated.

In one embodiment, the control module 110 may terminate the setting mode when a preset time elapses after entering the setting mode. In one embodiment, the control module 110 may terminate the setting mode when the termination of the setting mode or the selection of the general mode is input according to the input of the mouse 200. In one embodiment, the control module 110 may terminate the setting mode when a specific signal is input from the mouse 200. For example, the setting mode may be terminated when a signal related to the movement of the mouse 200 (a signal by the optical sensor) is received.

Then, the control module 110 may terminate the setting mode and release the blocking when the state of the mouse 200 or the signal received from the mouse 200 satisfies a preset condition. That is, the signal input from the mouse 200 after the setting mode is terminated is transmitted to the target device 300, and the mouse 200 operates as an input means.

For example, the condition for terminating the setting mode may be the case where the inverted mouse 200 returns to the normal position, as shown in FIG. 5. In addition, the condition for terminating the setting mode may be the case where a specific key or a combined signal of specific keys is received.

In one embodiment, the value of the target attribute may be set and changed directly in the mouse 200.

The mouse 200 may change the value of the corresponding attribute when a preset combination of input signals is input. Then, the mouse 200 transmits data for the changed attribute value to the dongle device 100, and the control module 110 may display information indicating the changed attribute value through the display 140.

Meanwhile, the control module 110 displays information indicating the attribute value changed in S340 (step S350).

In one embodiment, the control module 110 may control the display 140 so that the changed attribute value is applied to the information displayed as shown in FIG. 4.

In one embodiment, the display 140 may include an LED, and in this case, the control module 110 may control the display 140 so that the LED emits light according to the changed attribute value.

In one embodiment, the dongle device 100 capable of setting a mouse may operate even when the power of the target device 300 is OFF.

The dongle device 100 capable of setting a mouse may include a battery that may supply power independently.

In one embodiment, the control module 110 supplies power to the device 100 via the battery when the device 100 is not electrically connected to the target device 300, and stores the attribute value set in the setting mode in the storage module 130.

Then, the control module 110 not only transmits the changed attribute value to the mouse 200, but also, when the dongle device 100 and the target device 300 are electrically connected, transfers the attribute value stored in the storage module 130 to the target device 300 so that the corresponding attribute value is reflected.

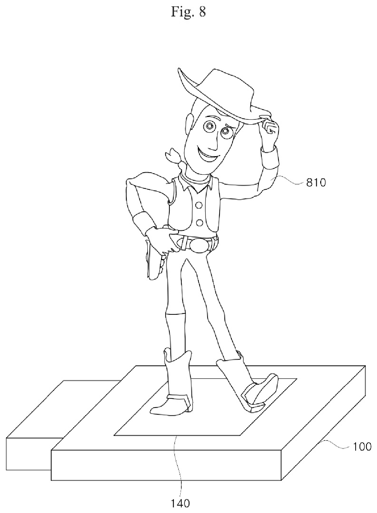

FIG. 8 is a diagram illustrating a figure being mounted on the dongle device.

Referring to FIG. 8, a figure 810 mounted on the dongle device 100 capable of setting a mouse is illustrated.

In one embodiment, the dongle device 100 capable of setting a mouse may further include a mounting part formed on one surface thereof so that the figure 810 may be mounted thereon. In addition, the mounting part includes a coupling structure allowing the replacement of the figure 810.

For example, the dongle device 100 capable of setting a mouse may include the mounting part capable of stably supporting the figure 810, which allows the user to selectively mount the desired figure 810.

In addition, the control module 110 may emit LEDs of various colors through the display 140 according to the setting of the attribute value, and the light emitted through the display 140 illuminates the figure 810 to maximize the visual design effect. Such a design element provides a customized function that may reflect the user's personality, and may play a role in enhancing immersion, especially in a gaming environment.

Additionally, functions such as color, blinking pattern, and brightness adjustment of the LED implemented in the display 140 serve to provide immediate feedback when the user changes the setting value, thereby supporting an intuitive user experience. Therefore, the present disclosure may provide a functional design that may maximize visual effects, beyond a simple mouse 200 setting change device.

The method according to an embodiment of the present disclosure described above may be implemented as a program (or application) and stored in a medium to be executed in combination with a hardware device.

The above-described program may include code coded in a computer language such as C, C++, JAVA, or machine language, which may be read by the processor (CPU) of the computer through the device interface of the computer, so that the computer reads the program and executes the methods implemented by the program. Such code may include functional code related to functions such as defining the necessary functions for executing the methods, and may include control code related to the execution procedure necessary for the processor of the computer to execute the functions according to a predetermined procedure. In addition, the code may further include memory reference code regarding where (address) in the internal or external memory of the computer additional information or media necessary for the processor of the computer to execute the functions should be referenced. Furthermore, if communication with any other computer or server in a remote location is required for the processor of the computer to execute the functions, the code may further include communication-related code regarding how to communicate with any other computer or server in a remote location using the communication module of the computer, and what information or media should be transmitted/received during communication.¹²

The storage medium is not a medium that stores data for a short moment, such as a register, cache, or memory, but a ³medium that stores⁴ data semi-permanently and is readable by a device. Specifically, examples of the storage medium include ROM, RAM, CD-ROM, magnetic tape, floppy disk, and optical data storage device, but are not limited thereto. That is, the program may be stored in various recording media on various servers accessible by the computer or in various recording media on the user's computer. In addition, the medium may be distributed in a computer system connected to a network, and a code readable by a computer may be stored in a distributed manner.

The steps of the method or algorithm described in connection with the embodiments of the present disclosure may be directly embodied in hardware, implemented by a software module executed by hardware, or implemented by a combination thereof. The software module may reside in a Random Access Memory (RAM), Read Only Memory (ROM), Erasable Programmable ROM (EPROM), Electrically Erasable Programmable ROM (EEPROM), Flash Memory, hard disk, removable disk, CD-ROM, or any form of computer-readable recording medium well known in the art to which the present disclosure belongs.

Although the embodiments of the present disclosure have been described above with reference to the accompanying drawings, those skilled in the art to which the present disclosure belongs will understand that the present disclosure may be implemented in other specific forms without changing its technical spirit or essential features. Therefore, the embodiments described above should be understood as being illustrative in all aspects and not restrictive.

## Claims

1. A dongle device capable of setting a mouse, comprising:
a display configured to display information indicating at least one attribute value set for the mouse;
a communication module configured to communicate with the mouse; and
a control module configured to, when a signal received from the mouse is a signal related to setting the attribute value, change the attribute value of the mouse according to the received signal, and control the display such that information indicating the changed attribute value is displayed.

2. The dongle device of claim 1, wherein the control module is configured to:
enter a setting mode for setting the attribute when a state of the mouse or a signal received from the mouse satisfies a preset first condition; and
change the attribute value based on the signal received from the mouse in the setting mode.

3. The dongle device of claim 2, wherein the control module is configured to determine that the first condition is satisfied when a combination of signals set for entry into the setting mode is received.

4. The dongle device of claim 2, wherein the control module is configured to change a corresponding attribute value according to the signal received from the mouse in the setting mode.

5. The dongle device of claim 4, wherein the control module is configured to:
select an attribute to be set according to a first signal input to and received from the mouse after entering the setting mode; and
change a value of the selected attribute according to a second signal received after the first signal.

6. The dongle device of claim 2, wherein the control module is configured to block transmission of a signal received from the mouse to a target device when the setting mode is entered, until the setting mode is terminated.

7. The dongle device of claim 6, wherein the control module is configured to terminate the setting mode and release the blocking when the state of the mouse or the signal received from the mouse satisfies a preset second condition.

8. The dongle device of claim 1, further comprising:
a battery; and
a storage module,
wherein the control module is configured to:
supply power to the device via the battery when the device is not electrically connected to a target device;
store the attribute value set in the setting mode in the storage module; and
transfer the attribute value stored in the storage module to the target device to reflect the attribute value when electrically connected to the target device.

9. The dongle device of claim 1, further comprising:
a mounting part formed such that a figure is mounted on one surface of the dongle device capable of setting the mouse,
wherein the mounting part includes a coupling structure allowing the figure to be replaceable.

10. A control method for a dongle device capable of setting a mouse, the method comprising:
displaying a set value for at least one attribute configured for the mouse;
receiving a signal input from the mouse;
changing the value of the attribute according to the received signal, when the received signal is a signal related to setting the attribute; and
displaying information indicating the changed value of the attribute through a display.

11. A mouse setting system, comprising:
a mouse; and
a dongle device capable of setting the mouse,
wherein the dongle device includes:
a display configured to display information indicating at least one attribute value set for the mouse;
a communication module configured to communicate with the mouse; and
a control module configured to, when a signal received from the mouse is a signal related to setting the attribute value, change the attribute value of the mouse according to the received signal, and control the display such that information indicating the changed attribute value is displayed.
